# EUROPÄISCHE PATENTSCHRIFT

(11) **EP 1 190 664 B1**
(45) Veröffentlichungstag und Bekanntmachung des Hinweises auf die Patenterteilung: **17.06.2009**
(21) Anmeldenummer: 01121609.0
(22) Anmeldetag: 11.09.2001
(51) Int. Cl.: A47L 13/512, B62B 3/00, A47B 57/48

(54) **Verbindungsteil für einen Reinigungswagen**
Connection device for a cleaning trolley
Dispositif de liaison pour un chariot de nettoyage

(30) Priorität: 25.09.2000 DE 10047352
(43) Veröffentlichungstag der Anmeldung: 27.03.2002
(73) Patentinhaber: VERMOP Salmon GmbH, D-97877 Wertheim (DE)
(72) Erfinder: Salmon, Dirk, 97877 Wertheim (DE)
(74) Vertreter: HOFFMANN EITLE

(56) Entgegenhaltungen:
- DE-A- 19 504 771
- FR-A- 1 264 653
- FR-A- 1 572 232
- US-A- 3 362 738
- PATENT ABSTRACTS OF JAPAN vol. 1999, no. 06, 31. März 1999 (1999-03-31) & JP 01 185205 A (HAMILTON IND INC), 24. Juli 1989 (1989-07-24)

## Beschreibung

### Gebiet der Erfindung

Die Erfindung bezieht sich auf einen Wagen zur Aufnahme von Utensilien für Reinigungszwecke, wie Eimer, Wannen, Schalen, Körbe, Mopppressen, Reinigungsgeräte, Abfallsäcke und dergleichen, und insbesondere auf ein Verbindungsteil für einen solchen Reinigungswagen, um die aufzunehmenden Elemente an dem Wagen anzubringen.

Reinigungswagen werden dazu verwendet, die verschiedenartigsten Utensilien, die zur Reinigung von Gebäuden, insbesondere bei der gewerblichen Reinigung verwendet werden, so unterzubringen, dass sie einfach und rasch von der Reinigungskraft transportiert werden können, wobei die Reinigungskraft nicht unnötig hohen körperlichen Belastungen ausgesetzt werden soll. Solche Reinigungswagen erweisen sich insbesondere dann als nützlich, wenn eine flexible Unterbringung der Reinigungsutensilien möglich ist, da dann die Auswahl der Utensilien, also der Wannen, Schalen, Körbe, Mopppressen, Reinigungsgeräte und Abfallsäcke, beispielsweise, den Anforderungen der Reinigung angepasst werden kann, ohne zu einem anderen Reinigungswagen wechseln zu müssen.

### Stand der Technik

Ein solcher Reinigungswagen, der eine Unterbringung der Reinigungsutensilien ermöglicht, ist beispielsweise aus der DE 195 04 771 A1 bekannt. Der beschriebene Reinigungswagen umfasst ein Fahrgestell und einen Trägeraufbau, der als modulares Stecksystem aus selbsttragender Basiswanne bzw. selbstragendem Basisgitter für das Fahrgestell und vertikalen Trägerholmen (Trägerprofile) aufgebaut ist. An den Trägerholmen werden Anhängemittel für die genannten Reinigungsutensilien vorgesehen. Die Trägerholme sind in der Betriebsposition vertikal ausgerichtet und weisen ein Profil auf, an dem in verschiedenen Höhen jeweils zwei einander gegenüberliegende Einhängenuten angebracht sind. Das Profil der Trägerholme ist beispielsweise als eine Auswölbung gestaltet, die an ihren Rändern nach innen abgewinkelte Stabilisierungsnuten aufweist. An diesen Stabilisierungsnuten sind die Einhängenuten angeordnet.

Die Nuten, die in dem Profil vorgesehen sind, werden dazu verwendet, sogenannte Einhängeteile einzuhängen. Je Nut wird dabei ein Einhängeteil verwendet. Als Alternative kann ein Einhängeteil auch in mehreren Nuten eingehängt werden. Zum Einhängen weisen die Einhängeteile hakenartige Fortsetzungen auf, die in die Einhängenuten des Trägerholms eingreifen. An diesen Einhängeteilen wiederum kann durch Hängen oder Stellen ein Element der zu verwendenden Reinigungsutensilien angebracht werden.

Die CH 689 863 A5 beschreibt eine Klemmvorrichtung für die hängende Anordnung von Werkzeugen und Geräten aller Art. Dabei werden zwei Klemmbacken auf einer Schiene zusammengeschoben und durch Einrasten von Einrastnoppen in entsprechenden Nuten auf dieser Schiene fixiert.

Ferner offenbart DE 19 504 771 A1 ein Verbindungsteil für einen Reinigungswagen, umfassend ein Halteelement und mindestens zwei einander gegenüberliegende Einrastelemente, die zum Einrasten in Nuten am Reinigungswagen geeignet sind.

### Darstellung der Erfindung

Der Erfindung liegt die Aufgabe zugrunde, ein Verbindungsteil zwischen Reinigungswagen und Reinigungsutensilien, insbesondere Wannen oder Schalen, zu schaffen, das flexibel im Einsatz ist und sicher am Reinigungswagen zu Verankern ist.

Eine weitere Aufgabe der Erfindung ist es, ein entsprechendes Trägersystem für einen Reinigungswagen vorzusehen und einen Reinigungswagen vorzusehen, der hinsichtlich der Anbringung der Reinigungsutensilien flexibel einsetzbar ist.

Diese Aufgaben werden durch ein Verbindungsteil mit den Merkmalen des Anspruchs 1, ein Trägersystem mit den Merkmalen des Anspruchs 7 und einen Reinigungswagen mit den Merkmalen des Anspruchs 10 gelöst.

Der Erfindung liegt der Gedanke zugrunde, die bisherige Anbringung von Verbindungsteilen durch Einhängen in Einhängenuten, insbesondere an Trägerprofilen des Reinigungswagens, durch Schnappverbindungen zu ersetzen. Dadurch entfällt die Notwendigkeit, die Verbindungsteile beim Einsetzen in den Reinigungswagen schräg stellen oder kippen zu müssen. Dazu werden frei bewegliche, also vom Reinigungswagen trennbare Elemente geschaffen, die Einrastelemente aufweisen, die durch Schieber betätigbar sind, so dass sie von einer Einrastposition in eine Nicht-Einrastposition durch Betätigen der Schieber gebracht werden können. Die Einrastelemente sind so gestaltet, dass sie in der Einrastposition in die Nuten eines Trägerprofils am Reinigungswagen oder in Nuten, die auf anderem Weg am Reinigungswagen angebracht sind, eingreifen. Dadurch können die Verbindungselemente, solange sich die Einrastelemente in der Einrastposition befinden, nicht aus den Nuten entfernt werden, unabhängig davon, ob auf den Reinigungswagen Stöße oder ähnliches wirken. Auch eine andere Krafteinwirkung in einer beliebigen Raumrichtung löst die Verbindung zwischen Verbindungsteil und Trägerprofil des Reinigungswagens nicht. Dadurch kann vermieden werden, dass sich das Verbindungsteil unerwünschter Weise löst und die auf dem Verbindungsteil angebrachten Reinigungsutensilien herunterfallen.

Ein erfindungsgemäßes Trägersystem für einen Reinigungswagen umfasst entsprechend mindestens ein Trägerprofil, das mit einander gegenüberliegenden, auf das Verbindungsteil abgestimmten Nuten versehen ist, und ein erfindungsgemäß gestaltetes Verbindungsteil. Ein erfindungsgemäßer Reinigungswagen zeichnet sich schließlich dadurch aus, dass er ein erfindungsgemäßes Trägersystem aufweist.

Erfindungsgemäß weist das Verbindungsteil insgesamt vier Einrastelemente auf, wobei jeweils zwei in Einbauposition vertikal übereinanderliegen. Diese übereinanderliegenden Einrastelemente sind dazu vorgesehen, dass sie in ebenfalls übereinanderliegende Einhängenuten an dem Trägerprofil eingreifen können. Dabei ist es möglich, die Einrastelemente auf einer Seite, also solche die übereinanderliegen, mit einem gemeinsamen Schieber zu betätigen, so dass für das gesamte Verbindungsteil bei vier Einrastelementen zwei Schieber vorgesehen sind. Selbstverständlich können auch noch mehr Einrastelemente vertikal übereinander eingesetzt werden. Eine Mehrzahl von Einrastelemente vertikal übereinander ist vorteilhaft, da dadurch ein sichererer Sitz des Verbindungsteils im Trägerprofil bzw. am Reinigungswagen gewährleistet wird.

Vorteilhafte Ausführungsformen das Verbindungsteils und des Trägersystems sind durch die übrigen Ansprüche gekennzeichnet.

Nach einer vorteilhaften Ausführungsform ist das Halteelement des Verbindungsteils im Einbauzustand am Reinigungswagen vertikal ausgerichtet. Eine vertikale oder nahezu vertikale Ausrichtung des Halteelements ermöglicht es, dass Wannen oder Schalen direkt in das Halteelement eingehängt werden können und somit mit dem Verbindungsteil (und damit dem Reinigungswagen) zuverlässig verbunden werden können. Da Wannen oder Schalen, die zur Reinigung verwendet werden, gewöhnlicher Weise einen nach außen gebogenen, umlaufenden Rand aufweisen, ist das Einhängen dieser Wannen oder Schalen oder ähnliche Elemente mit ihrem nach außen gebogenen, umlaufenden Rand am Halteelement eine zuverlässige Befestigung. Zudem ist festzuhalten, dass die Befestigung rasch hergestellt und gelöst werden kann.

Dazu ist es selbstverständlich erforderlich, dass die Dicke des Halteelements auf den umgebogenen Rand an den Wannen bzw. Schalen abgestimmt ist. Ebenso muss selbstverständlich sichergestellt sein, dass der Abstand zwischen zwei gegenüberliegenden Wänden der Schalen bzw. Wannen und der Abstand zwischen zwei gegenüberliegenden Verbindungsteilen, die an zwei gegenüberliegenden Trägerprofilen eingesetzt sind, identisch ist. Sind diese Voraussetzungen gegeben, so bringt die Einhängung der Wannenränder an zwei gegenüberliegenden Seiten es mit sich, dass die Wanne bzw. Schale in der Richtung senkrecht zu der zur Einhängung verwendeten Wand verrutschsicher und in der dazu senkrechten Richtung nur in begrenztem Maß verschiebbar gelagert ist.

Selbstverständlich können auch anders gestaltete Halteelemente statt vertikaler Platten vorgesehen werden, die an die Befestigungseinrichtungen an den Reinigungsutensilien angepasst sind. Nach einer vorteilhaften Ausführungsform werden die Einrastelemente durch ein Vorspannelement in einer Einrastposition vorgespannt. Dies bedeutet insbesondere, dass zum Lösen aus der Arretierung in den Nuten am Reinigungswagen eine Kraft erforderlich wird, die die Vorspannkraft des Vorspannelements überwindet. Andererseits stellt dies sicher, dass ein unbeabsichtigtes Verrutschen oder Lösen im eingerasteten Zustand, also am Reinigungswagen befestigten Zustand, nahezu ausgeschlossen ist.

Das Vorspannelement kann beispielsweise als eine Feder gestaltet sein, die zwischen den Einrastelementen angebracht ist und dort wirkt. Alternativ dazu ist es auch möglich, dass die Feder oder ein ähnliches Vorspannelement auf die Schieber zur Betätigung der Einrastelemente wirkt. Eine Feder ist insbesondere deshalb geeignet, da sie ohne weitere Umlenk- oder Korrekturmechanismen sicherstellt, dass sie im entspannten Zustand, den sie natürlicherweise anstrebt, die Einrastelemente mit den Schiebern nach außen drückt, also in die Einrastposition drückt. Eine Alternative zu einer Feder als Vorspannelement ist z. B. ein Exzentermechanismus.

Bevorzugter Weise werden die Schieber und/oder die Einrastelemente in einer Führung geführt. Dies verhindert insbesondere, dass ein Verkeilen der Elemente auftritt. Gleichzeitig wird vermieden, dass sich die Einrastelemente wegen einer Verkeilung nicht einrasten oder lösen lassen. Insbesondere ist es vorteilhaft, wenn die Führung das Einrastelement im nicht eingerasteten Zustand von drei Seiten her umschließt, also eine nutartige Führung vorgesehen wird, wobei die vierte Seite offen ist, so dass die Schieber sich in diese vierte Richtung erstreckend angebracht werden können. Die weiteren zwei Richtungen, die einander gegenüber liegen, dienen der Verschiebung, also der Bewegung der Einrastelemente in die Einrastposition und in die Ruheposition. Es ist jedoch auch denkbar, dass die Führungen nicht an drei sondern nur einer oder zwei Seiten vorgesehen sind. Alternative Führungsarten, etwa dass die Einrastelemente auf einer Schiene oder ähnlichem laufen, sind ebenfalls denkbar.

Vorteilhafter Weise ist das Verbindungsteil im wesentlichen aus Kunststoff. Dies stellt eine kostengünstige Herstellung sicher.

Vorteilhafter Weise sind die Trägerprofile des Trägersystems für einen Reinigungswagen als Profilelemente gestaltet, die eine Führung für das Verbindungsteil aufweisen. Dies ermöglicht es, dass das Verbindungsteil im nicht eingerasteten Zustand der Einrastelemente in vertikaler Richtung entlang des Trägerelements verschoben werden kann. Die Führung kann dabei als einfacher Anschlag bzw. Gleitfläche ausgeführt sein. Alternative Ausführungsformen, beispielsweise Schienen, sind ebenfalls denkbar.

Nach einer bevorzugten Ausführungsform ist eine Breite des Verbindungsteils kleiner als eine lichte Weite des Trägerprofils, wenn die Schieber und Einrastelemente im nicht eingerasteten Zustand sind. Im Gegensatz dazu sind bei Schiebern und Einrastelementen im Einrastzustand die Abmessungen des Verbindungsteils so, dass der Abstand zwischen den freien Enden der Einrastelemente größer ist als die lichte Weite des Trägerprofils zwischen Einrastnuten. Diese geometrischen Abmessungen stellen einerseits sicher, dass das Verbindungsteil einfach in das Trägerprofil eingesetzt werden kann. Dazu ist es nicht nötig, das Trägerprofil zu kippen oder umständlich zu drehen. Andererseits stellen diese Abmessungen gleichzeitig sicher, dass das Verbindungsteil, wenn es zwischen zwei jeweiligen Nuten des Trägerprofils eingerastet ist, sich nicht unbeabsichtigt lösen kann.

### Kurze Beschreibung der Zeichnungen

Nachfolgend wird die Erfindung rein beispielhaft anhand der beigefügten Figuren beschrieben, in denen:
- Fig. 1: eine Explosionsansicht eines Trägersystems für einen Reinigungswagen zeigt; und
- Fig. 2: eine perspektivische Ansicht eines erfindungsgemäßen Trägersystems für einen Reinigungswagen zeigt, wobei ein Verbindungselement in ein Trägerprofil eingesetzt ist.

### Wege zur Ausführung der Erfindung

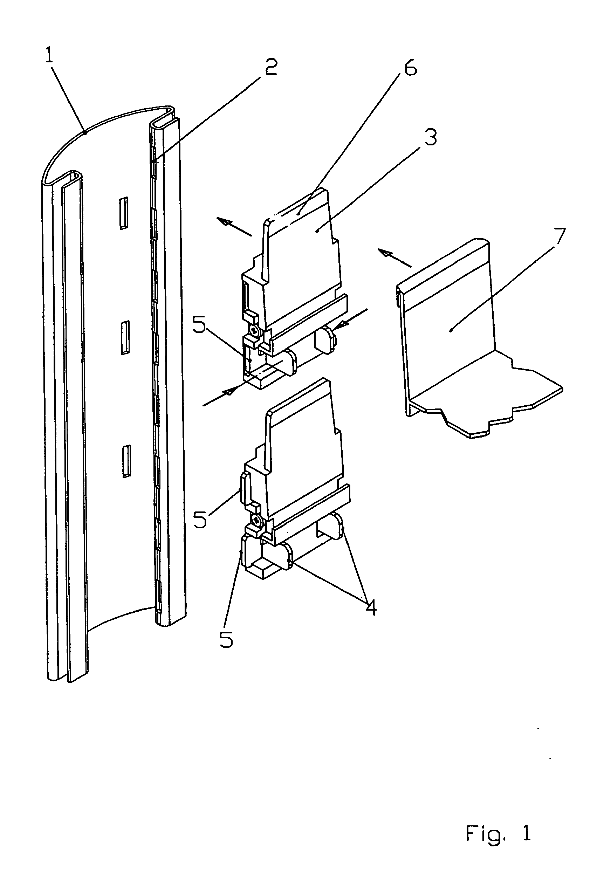

In Figur 1 ist eine Explosionsansicht eines Trägersystems für einen Reinigungswagen dargestellt. Das Trägersystem umfasst ein Trägerprofil 1, das im wesentlichen eine gewölbte Form aufweist, wobei an den Rändern Stabilisierungsnuten im Profil vorgesehen sind. Diese Stablisierungsnuten sind nach innen gewölbt. Entlang der seitlichen Stabilisierungsnuten sowie an der Rückwand weist das Trägerprofil 1 Einhängenuten 2 auf. Dabei sind für die vorliegende Erfindung insbesondere die Einhängenuten 2 an den seitlichen Stabilisierungsnuten zur Sicherstellung der Funktionalität wesentlich.

Zum Einsatz in diese Einhängenuten 2 ist ein Verbindungsteil 3 vorgesehen. Dieses Verbindungsteil 3 ist vorteilhaft aus Kunststoff gefertigt. Selbstverständlich können jedoch auch andere Werkstoffe zum Einsatz kommen.

Das Verbindungsteil 3 weist als funktionstragende Hauptkomponenten ein Halteelement 6 sowie durch Schieber 4 betätigbare Einrastelemente 5 auf. Das Halteelement 6 steht in Einbaulage im wesentlichen senkrecht nach oben und weist eine Form auf, so dass sein oberer Rand mit dem umgebogenen Rand einer Wanne 7, die in Figur 1 als Ausschnitt dargestellt ist, in Eingriff kommen kann.

Senkrecht zu der Erstreckungsrichtung des Halteelements sind Einrastelemente 5 verschiebbar vorgesehen. Diese Einrastelemente 5 sind von einer Position, in der sie innerhalb der äußeren Abmessungen des Hauptverschiebeelements untergebracht sind, und einer Position, in der sie über diese hervorstehen, verschiebbar. In der in Figur 1 dargestellten Ausführungsform sind auf jeder Seite des Verbindungsteils 3 jeweils zwei übereinanderliegende Einrastelemente 5 vorgesehen, so dass sich eine Gesamtzahl von vier Einrastelementen 5 am Verbindungsteil 3 ergibt.

In der dargestellten Ausführungsform ist je Seite jeweils ein Schieber 4 vorgesehen, mit dem jeweils zwei Einrastelemente betätigbar sind. Durch Betätigen der Schieber 4 sind die Einrastelemente 5 verschiebbar. Die Schieber 4 und die Einrastelemente 5 bewegen sich bei Betätigung der Schieber 4 in einem 1:1 Verhältnis, so dass insbesonders bei einem Zusammendrücken der Schieber 4 die Einrastelemente 5 in die Mitte des Verbindungsteils 3 bewegt werden. Zwischen Schieber und Einrastelemente kann, wenn dies gewünscht ist, auch eine Übersetzung angebracht sein, so dass sich beispielsweise bei einem bestimmten Verschiebeweg der Schieber ein größerer Verschiebeweg der Einrastelemente ergibt.

In Figur 1 ist ein Verbindungsteil 3 in einer Position dargestellt, in der sich die Einrastelemente 5 in der Nicht-Einrastposition befinden. In einer zweiten Darstellung in Figur 1 ist das Verbindungsteil 3 in Einrastposition gezeigt, die Einrastelemente 5 sind also ausgefahren und stehen über das Verbindungsteil 3 vor.

Zur Führung der Einrastelemente 5 sind Führungen vorgesehen. Diese umfassen im wesentlichen einen entsprechend geformten Teil des Gehäuses des Verbindungsteils 3, so dass die Einrastteile 5 entlang Nuten in dem Verbindungsteil 3 geführt werden. Insbesondere umschließt also das Gehäuse die Einrastteile 5 von drei Seiten, so dass einerseits eine verkeilfreie Bewegung in die Einrastposition und von der Einrastposition sichergestellt bleibt und andererseits die Seite offen und nicht umschlossen ist, an der die Schieber zur Betätigung der Einrastelemente 5 vorgesehen sind.

Nicht dargestellt ist ein Vorspannelement, das vorteilhafter Weise zwischen zwei Einrastelementen 5, die sich auf gleicher horizontaler Höhe in Einbauposition befinden, angebracht ist.

Dieses Vorspannelement kann beispielsweise als Feder gestaltet sein, die in entspanntem Zustand eine Position einnimmt, die bewirkt, dass die Einrastelemente 5 sich in Einrastposition befinden. Solch ein Vorspannelement kann zwischen allen Einrastelementen, die sich jeweils auf gleicher horizontaler Höhe in Einbauposition befinden, vorgesehen sein, wobei ein oder mehrere solche Vorspannelemente, abhängig von der Anzahl der Einrastelemente, angebracht sein können. Auch bei einer Vielzahl von Paaren von Einrastelementen ist ein solches Vorspannelement jedoch normalerweise genügend. Alternativ dazu ist es auch denkbar, das Vorspannelement zwischen den Schiebern 4 anzubringen, da dadurch ebenfalls sichergestellt wird, dass als Ruheposition die Einrastposition der Einrastelemente eingenommen wird.

Es ist selbstverständlich, dass die weiteren geometrischen Abmessungen des Verbindungsteils 3 auf das Trägerprofil 1 abgestimmt sind. Insbesondere ist es vorteilhaft, wenn das Verbindungsteil 3, wenn sich die Einrastelemente 5 in Nicht-Einrastposition befinden, entlang der Vertikalrichtung im Trägerprofil 1 verschoben werden kann. Dazu kann es beispielsweise auf den Verstärkungsnuten, also den nach innen gebogenen Begrenzungen des Trägerprofils 1 gleiten, wenn diese als Führungsflächen gestaltet sind. Andere Arten der Führung in den Trägeprofilen eines Reinigungswagens sind denkbar, beispielsweise schienenartige Führungen.

Ferner ist festzuhalten, dass das Verbindungsteil 3, ebenso wie das Trägerprofil 1, in der dargestellten Ausführungsform symmetrisch bezüglich einer Mittellinie, die sich vertikal erstreckt, ausgebildet ist.

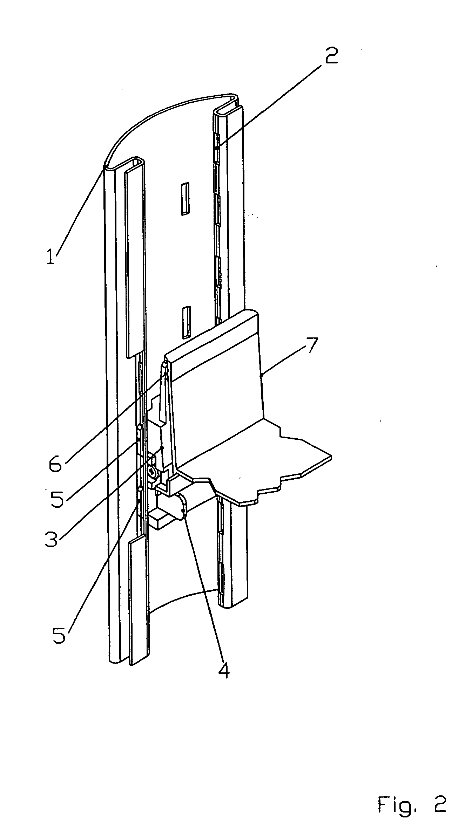

In Figur 2 ist das Verbindungsteil 3 und eine Wanne 7 (im Ausschnitt dargestellt) in im Trägerprofil 1 eingehängten Zustand gezeigt. Es sind dabei Bereiche des Trägerprofils 1 ausgeschnitten, um zu verdeutlichen, wie die Einrastelemente 5 in die dafür vorgesehenen Nuten 2 des Trägerprofils 1 einrasten. Selbstverständlich sind die Nuten auch an anderen Elementen als einem Trägerprofil am Reinigungswagen vorsehbar, wenn der Reinigungswagen beispielsweise keine solchen Trägerprofile aufweist.

Im Folgenden wird kurz die Arbeitsweise des Verbindungsteils bzw. des Trägersystems für einen Reinigungswagen erläutert.

Ein Trägerprofil 1, das in vorgegebenen vertikalen Abständen Einhängenuten 2 aufweist, ist fest an einem Reinigungswagen befestigt. Die Einhängenuten 2 sind dabei so gestaltet, dass jeweils zwei Einhängenuten 2 sich auf gleicher Höhe gegenüberliegen. Die weitere Gestaltung des Trägerprofils also insbesondere die Außenkontur ist dabei im wesentlichen frei wählbar.

Um ein Verbindungsteil 3 in dieses Trägerprofil 1 einzusetzen, werden die Schieber 4 betätigt, so dass sie in Richtung Mittellinie (Symmetrielinie) des Verbindungsteils 3 zusammengedrückt werden. Dabei werden die Einrastelemente 5 mitbewegt, so dass sie sich auch in Richtung auf die Mittellinie des Verbindungsteils 3 zu bewegen und in diesem fluchtend untergebracht sind. Eine Führung für die Einrastelemente 5 verhindert, dass sie sich bei der Verschiebebewegung schräg stellen. Beim Zusammenrücken der Schieber 4 muss die Kraft einer Feder oder eines anderen Vorspannelements überwunden werden, die dazu beiträgt, dass die Ruheposition der Einrastelemente 5 eine Position ist, in der die Einrastelemente 5 über den Umriss des Verbindungsteils 3 vorstehen.

Wenn diese Schieber 4 zusammengedrückt sind (und die Einrastelemente 5 sich in der Nicht-Einrastposition befinden), kann das Verbindungsteil 3 senkrecht zur Längserstreckungsrichtung des Trägerprofils 1 in dieses eingeschoben werden. Dabei wird eine gewünschte Höhe für das Verbindungsteil 3 ausgewählt. Diese Höhe kann jedoch auch, solange die Schieber 4 zusammengedrückt bleiben, durch ein vertikales Verschieben des Verbindungselements 3 entlang des Trägerprofils 1, wobei es von diesem geführt wird, verändert werden.

Ist die gewünschte Höhe für das Verbindungsteil 3 erreicht und sind Einhängenuten 2 in dieser Höhe vorgesehen, so werden die Schieber 4 freigegeben, wodurch die Einrastelemente durch Wirkung der Federkraft nach außen gedrückt werden, so dass sie in die Nuten im Trägerprofil 1 einrasten. Es ist festzuhalten, dass im vorliegenden Fall insgesamt vier Einrastelemente vorgesehen sind. Diese Anzahl ist jedoch nicht beschränkt zu verstehen. Es können vielmehr auch nur zwei oder mehrere Einrastelemente 5 vorgesehen sein. Vier ist jedoch günstig, da in diesem Fall ein Verdrehen, Verkeilen oder ähnliches des Verbindungsteils vermieden wird. Die Einrastelemente rasten in jeweils zwei übereinander vorgesehene Nuten auf jeder Seite ein.

Ist das Verbindungsteil 3 in der gewünschten Position arretiert, so kann eine Wanne oder Schale 7 oder ein anderes Element, das einen Rand oder eine andere Konfiguration zum Einhängen im Halteelement des Schiebers aufweist eingehängt werden. Selbstverständlich kann das Halteelement 6 auch anders gestaltet sein, so dass auf nahezu beliebige Formen der Reinigungsutensilien Rücksicht genommen werden kann und diese durch das erfindungsgemäße Verbindungsteil am Reinigungswagen angebracht werden können.

Schließlich ist festzuhalten, dass ein Lösen wiederum durch einfaches Zusammendrücken der Schieber und damit Entriegeln der Einrastelemente mit den Einhängenuten 2 geschieht. Soll das Verbindungsteil 3, auch mit aufgesetzter Wanne 7, in der Höhe verschoben werden, so ist dies ebenfalls möglich, indem die Schieber 4 zusammengedrückt werden, die Arretierung dadurch freigegeben wird und die Verbindungsteile 3 entlang den Führungen durch die Trägerprofile 1 verschoben werden.

Der wesentliche Aspekt der Erfindung liegt darin, dass eine zuverlässige, rasche Verbindung zwischen Reinigungsutensilien und einem Trägerprofil eines Reinigungswagens vorgesehen werden kann, wobei durch Anpassung des Halteelements am Verbindungsteil nahezu alle Konfigurationen von Reinigungsutensilien berücksichtigt werden können.

## Patentansprüche

1. Verbindungsteil (3) für einen Reinigungswagen, umfassend ein Halteelement (6) und mindestens zwei einander gegenüberliegende Einrastelemente (5) die zum Einrasten in Nuten (2) am Reinigungswagen geeignet sind,
**dadurch gekennzeichnet, dass**
die zwei einander gegenüberliegenden Einrastelemente (5) durch Schieber (4) zum Einrasten in den Nuten (2) am Reinigungswagen betätigbar sind, und
dass jeweils zwei in Einrastposition übereinander liegende Einrastelemente (5) vorgesehen sind, die durch denselben Schieber (4) betätigbar sind.

2. Verbindungsteil (3) nach Anspruch 1, **dadurch gekennzeichnet, dass** das Halteelement (6) im Einbauzustand am Reinigungswagen vertikal ausgerichtet ist.

3. Verbindungsteil (3) nach einem der vorhergehenden Ansprüche, **dadurch gekennzeichnet, dass** die Einrastelemente (5) durch ein Vorspannelement in einer Einrastposition vorgespannt werden.

4. Verbindungsteil (3) nach Anspruch 3, **dadurch gekennzeichnet, dass** das Vorspannelement eine Feder ist.

5. Verbindungsteil (3) nach einem der vorhergehenden Ansprüche, **dadurch gekennzeichnet, dass** die Schieber (4) und/oder die Einrastelemente (5) in einer Führung geführt werden.

6. Verbindungsteil (3) nach einem der vorhergehenden Ansprüche, **dadurch gekennzeichnet, dass** es aus Kunststoff gefertigt ist.

7. Trägersystem für einen Reinigungswagen, umfassend mindestens ein Verbindungsteil (3) nach einem der Ansprüche 1 bis 6 und mindestens ein Trägerprofil (1), das mit einander gegenüberliegenden, auf das Verbindungsteil abgestimmten Nuten (2) versehen ist.

8. Trägersystem nach Anspruch 7, **dadurch gekennzeichnet, dass** das mindestens eine Verbindungsteil (3) so gestaltet ist, dass es im nicht eingerasteten Zustand entlang des mindestens einen Trägerprofils (1) durch das Trägerprofil (1) geführt verschiebbar ist.

9. Trägersystem nach Anspruch 7 oder 8, **dadurch gekennzeichnet, dass** der Abstand zwischen einander gegenüberliegenden Nuten (2) des mindestens einen Trägerprofils (1) größer ist als die Breite des Verbindungsteils (3) mit Einrastelementen (5) in Nicht-Einrastposition und kleiner als die Breite des Verbindungsteils mit Einrastelementen (5) in Einrastposition.

10. Reinigungswagen mit einem Trägersystem nach einem der Ansprüche 7 bis 9.

## Claims

1. Connecting portion (3) for a cleaning vehicle, comprising a holding element (6) and at least two mutually opposed latch elements (5) which are suitable for latching in grooves (2) on the cleaning vehicle,
**characterised in that**
the two mutually opposed latch elements (5) can be actuated by slides (4) to latch in the grooves (2) on the cleaning vehicle, and
**in that** in each case there are provided two latch elements (5) which are located one above the other in the latched position and which can be actuated by the same slide (4).

2. Connecting portion (3) according to claim 1, **characterised in that** the holding element (6) is vertically oriented when fitted on the cleaning vehicle.

3. Connecting portion (3) according to any of the preceding claims, **characterised in that** the latch elements (5) are biased by a biasing element in a latched position.

4. Connecting portion (3) according to claim 3, **characterised in that** the biasing element is a spring.

5. Connecting portion (3) according to any of the preceding claims, **characterised in that** the slides (4) and/or the latch elements (5) are guided in a guide.

6. Connecting portion (3) according to any of the preceding claims, **characterised in that** it is made of plastic.

7. Carrier system for a cleaning vehicle, comprising at least one connecting portion (3) according to any of claims 1 to 6 and at least one carrier profile (1) which is provided with mutually opposed grooves (2) coordinated with the connecting portion.

8. Carrier system according to claim 7, **characterised in that** the at least one connecting portion (3) is designed in such a way that, in the unlatched state, it is slidable along the at least one carrier profile (1), guided by the carrier profile (1).

9. Carrier system according to claim 7 or 8, **characterised in that** the distance between mutually opposed grooves (2) of the at least one carrier profile (1) is greater than the width of the connecting portion (3) with latch elements (5) in the unlatched position and smaller than the width of the connecting portion with latch elements (5) in the latched position.

10. Cleaning vehicle having a carrier system according to any of claims 7 to 9.

## Revendications

1. Dispositif de liaison (3) pour un chariot de nettoyage, comprenant un élément de maintien (6) et au moins deux éléments d'encliquetage (5) opposés l'un à l'autre, convenant pour l'encliquetage dans des rainures (2) ménagées sur le chariot de nettoyage,
**caractérisé en ce que**
les deux éléments d'encliquetage (5) opposés l'un à l'autre sont actionnables au moyen de coulisseaux (4), pour encliquetage dans les rainures (2) ménagées sur le chariot de nettoyage, et **en ce que**, chaque fois, deux éléments d'encliquetage (5), situés l'un au dessus de l'autre en position d'encliquetage, sont prévus, actionnables au moyen du même coulisseau (4).

2. Dispositif de liaison (3) selon la revendication 1, **caractérisé en ce que** l'élément de maintien (6) est orienté verticalement sur le chariot de nettoyage, lorsqu'on se trouve à l'état monté.

3. Dispositif de liaison (3) selon l'une quelconque des revendications précédentes, **caractérisé en ce que** les éléments d'encliquetage (5) sont précontraints en une position d'encliquetage, au moyen d'un élément de précontrainte.

4. Dispositif de liaison (3) selon la revendication 3, **caractérisé en ce que** l'élément de précontrainte est un ressort.

5. Dispositif de liaison (3) selon l'une quelconque des revendications précédentes, **caractérisé en ce que** les coulisseaux (4) et/ou les éléments d'encliquetage (5) sont guidés dans un guidage.

6. Dispositif de liaison (3) selon l'une quelconque des revendication précédentes, **caractérisé en ce qu'**il est fabriqué en matière synthétique.

7. Système support pour un chariot de nettoyage, comprenant au moins un dispositif de liaison (3) selon l'un des revendications 1 à 6 et au moins un profilé support (1), muni de rainures (2) adaptées au dispositif de liaison, opposées entre elles.

8. Système support selon la revendication 7, **caractérisé en ce que** le au moins un dispositif de liaison (3) est configuré de manière à être déplaçable, à l'état non encliqueté, le long du au moins un profilé support (1), de manière guidée par le profilé support (1).

9. Système support selon la revendication 7 ou 8, **caractérisé en ce que** l'espacement entre des rainures (2), opposées l'une à l'autre, du au moins un profilé support (1) est plus grand que la largeur du dispositif de liaison (3) avec des éléments d'encliquetage (5) en position de non encliquetage et plus petit que la largeur du dispositif de liaison avec des éléments d'encliquetage (5) en position d'encliquetage.

10. Chariot de nettoyage avec un système support selon l'un des revendications 7 à 9.
